# EUROPEAN PATENT SPECIFICATION

(11) **EP 2 632 281 B1**
(45) Date of publication and mention of the grant of the patent: **16.07.2014**
(21) Application number: 11770695.2
(22) Date of filing: 05.10.2011
(51) Int. Cl.: A23N 15/06, A23L 1/275

(54) **FRUIT MARKING PROCEDURE**
VERFAHREN ZUR MARKIERUNG VON OBST
PROCÉDÉ POUR MARQUER DES FRUITS

(30) Priority: 28.10.2010 ES 201031584
(43) Date of publication of application: 04.09.2013
(73) Proprietor: Laser Food 2007, S.L., 46600 Alzira (Valencia) (ES); Universitat de Valéncia, 46010 Valencia (ES)
(72) Inventor: IBAÑEZ PUCHADES, Rafael, E-46010 Valencia (ES); PUCHE ROIG, Abel, 46600 Alzira (Valencia) (ES); SANFÉLIX PALAU, Jaime, 46600 Alzira (Valencia) (ES); MARTÍNEZ PALOP, Carlos, 46600 Alzira (Valencia) (ES)
(74) Representative: Carvajal y Urquijo, Isabel
(86) International application number: PCT/EP2011/004952
(87) International publication number: WO 2012/055476

(56) References cited:
- EP-A2- 1 747 838
- ES-B1- 2 284 407
- US-A- 5 897 797

## Description

### FIELD OF THE INVENTION

The invention describes a method of marking fruits comprising the performance of a superficial incision with a laser beam and depositing a contrast agent, comprising at least one metal cation, on the incision. The invention has application for identifying pieces of fruit, which allows it to trace them in the production of the piece of fruit from the producer to the end-consumer.

### BACKGROUND OF THE INVENTION

The epidermis of the fruits and other vegetables contains a high proportion of phenolic and/or polyphenolic compounds such as flavonoids and tannins, among others. These compounds react with metal ions:a metal ion interacts with flavonoids through complexation reactions. After complexation occurs, the redox reaction starts between the flavonoid and the metal to produce the corresponding quinone derivative of the involved flavonoid. The redox reaction between the flavonoid and the metal is the cause of the most significant effects of color changes of food products containing metal ions and phenolic compounds such as wine, tea and various iron supplements (Mellican, R.I. et al., The role of iron and the factors affecting off-color development of polyphenols, Journal of Agricultural and Food Chemistry 51 (2003) 2304-2316).

The iron cation is the most abundant metal in human organism and the major component of most dietary supplements which are currently marketed. The current Spanish and European legislation does not include references to maximum levels in food and derivatives, unlike the case for some heavy elements.

In the state of the art are described several methods for inscription on the surface of fruit pieces: paper label attached to the surface using edible glue and specific inks or methods of marking using laser radiation.

There are marking methods which use laser radiation to remove the most superficial material and thereby produce a discolored area that allows to distinguish a inscription. But this alternative is not very suitable for the marking of fruits, especially the family of citrus. When a CO₂ laser is used for marking citrus does not occur a selective fading of the surface pigments. It is required to increase the dynamic energy density of the laser beam to a very high value to produce markings visible to the naked eye. These marks are caused primarily by the calcination of the organic surface matter of the piece and, with the passage of time, they lead to structural collapse of the irradiated area.

The patent application US5897797 (A) describes a system of marking fruits where the incisions in the skin of the fruit are made by a laser or a dot matrix printer head and then a food colorant is applied to highlight the contrast. The dye applied emphasizes the mark made with laser but it also produces color changes in the adjacent zones to the mark, requiring a subsequent washing step to remove the dye excess. This document does not describe the use of salts or iron oxides as colorants.

The closest document in the state of the art is ES2284407 B1. This patent describes a method of marking fruit in which, first, a coloring agent is applied and then a laser beam makes an incision in the surface of the food piece. The energy of the laser beam produces effervescence and boiling phenomena in the contrast agent, so, in order to obtain good results with this method (ie high contrast) it is necessary to use iron salts or oxides as chromophore substances at a concentration higher than 10% of the total weight of coloring agent, whereas the preferred ratio is between 40% and 60%. However, in the present invention the contrast agent comprises iron oxides or salts at concentrations between 0.001% and 1%, which implies a great technical advantage.

These two patent applications use food coloring agents which have chromatic properties previously to their application. Subsequently these agents are incorporated into the fruit through the laser incisions. The present invention is different from these patent applications because the coloring agents which act as contrast generators do not show appreciable chromatic characteristics nor contrast by themselves at the proposed concentration. Only when the coloring agents are in contact with natural components of the fruit through the incisions made by laser and the metal-phenol/polyphenolic complexes are formed, the contrast is generated and the mark is recognized with naked eye. This mechanism eliminates the possibility of occasional or unintentional fruit marking.

The use of low concentrations of chromogen additives in a contrast agent is a great saving in cost of raw materials and an increase in the marking efficiency. The challenges of this technology consist in making visible marks on the surface of fruits with lower concentrations of chromogen additive. The solution proposed by the present invention is a method of marking fruits comprising the irradiation of the surface of the fruit with a laser to make an incision on it and the subsequent deposition on the incision of a contrast agent, comprising at least one metal cation at a concentration between 0.001 % and 1% of the total weight of the contrast agent. This agent can react with any phenolic and/or polyphenolic compounds present in the tissues of the fruit surface, causing a change in color specifically in the incision of the fruit surface.

### DESCRIPTION OF THE INVENTION

The inventors, with reference to the work of Fernandez, MT et al. (Fernández, M.T. et al., Iron and copper chelation by flavonoids: an electrospray mass spectrometry study, Journal of Inorganic Biochemistry 92 (2002) 105-111) have identified the presence of metal-flavonoid complexes in an extract of orange peel to which a laser incision was made and then the contrast agent of the invention was applied. This identification was performed by applying mass spectrometry techniques on the extract. The flavonoid-metal complexes identified in this orange peel extract are responsible for the color change, which is produced on the surface of the fruit when the contrast agent of the invention is applied after the laser incision. The work of Mellican, R.I. et al described how these metal-flavonoid complex reactions produce color changes in food products (wine, tea, iron supplements, etc.).

The present invention is a method of marking fruits comprising making a superficial incision on a fruit surface with a laser and a deposition in such incision of a contrast agent comprising at least one metal cation, at a concentration between 0.001% and 1% on the total weight, which is able to react with any of the phenolic and/or polyphenolic compounds present in the superficial tissues of the fruit.

In the present invention "fruit" is understood as a plant product whose skin contains phenolic and/or polyphenolic compounds, among which are the products of the citrus family (orange, lemon, grapefruit, etc), punica (pomegranate, etc), cucumis (yellow melon, Galia melon, etc) and diospyros (persimmon, etc).

In the present invention the term "superficial incision" is understood as one incision on the surface of a fruit that only affects the epidermis or the most outer part of the skin of the fruit, thus ensuring the structural stability of the piece along time.

In the present invention the term "contrast agent" is understood as a color-generating agent that has no color properties for himself and produces color only when interacts with any of the natural components (phenolic and/or polyphenolic components, such as, flavonoids) of fruit by means of chemical reactions between them.

A preferred embodiment is the method of the invention in which the metal cation is selected from the group consisting of Fe (II), Fe (III), Cu (I) and Cu (II). Another more preferred is the method of the invention in which the metal cation is a salt or an oxide. And another embodiment is one in which the salt or oxide of the metal cation is selected from the group consisting of ferric oxide, ferrous oxide, ferric ferrous oxide, iron chloride, copper (II) oxide, copper (I)oxide, copper (II) chloride, copper (I) chloride and copper acetate (II).

Another preferred embodiment is a method of the invention in which the contrast agent comprises an acidity regulator additive. And another embodiment isone in which the regulator additive is hydrochloric acid or sodium citrate tribasic.

Another preferred embodiment is a method of the invention in which the contrast agent comprises an emulsifier additive. And another embodiment is one in which the emulsifier additive is a polysorbate or HPMC.

Another preferred embodiment is the method of the invention in which the contrast agent comprises an antioxidant additive. And another embodiment is one in which the contrast agent is L-ascorbyl stearate.

Another preferred embodiment is the method of the invention in which the contrast agent comprises a complexing additive. And another embodiment is one in which the complexing additive is ascorbic acid, lactic acid or any of the salts of these acids.

The method of the invention allows obtaining high-contrast and permanent markings on fruit surface using a CO₂ laser with a dynamic energy density as low enough to ensure that the structural stability of a marked fruit is similar to that of an unmarked fruit.

The color reaction occurs selectively in areas of the fruit piece previously irradiated by the laser beam because it is exclusively in these zones where is produced the release of cellular and intercellular media of different surface tissues that contain, among other products, a large variety of phenolic compounds and polyphenols.

The method of the invention comprises two stages: first, make a superficial incision in a fruit with a CO₂ laser beam and second, deposit in it a contrast agent comprising at least one metal cation at a concentration between 0.001 % and 1%. The order of these steps is opposite to the procedure described in the document ES2284407 B1 and it is not suggested in ES2284407 B1. The method of the invention is not obvious and has inventive step because it gets a technical advantage by employing lower concentrations of metal ion than reported in the state of the art. This technical advantage means huge savings in cost of raw materials and increased efficiency of marking.

The contrast agent of the invention comprises at least one metal cation capable of reacting with any of the natural components of the fruit surface. In the examples of the invention, shown later, are described contrast agents that include iron or copper cations.

The contrast agent may be deposited on the surface of the fruit manually or automatically. The manual application may be done using a plastic roller compatible with food handling. If the production of high-contrast marks is part of an automated production process the use of any automatic dispensing procedure, such as direct spraying, injection is desirable. Due to the precision and accuracy in the dosing of product achieved by spraying, an automatic system is preferred.

### BRIEF DESCRIPTION OF THE FIGURES

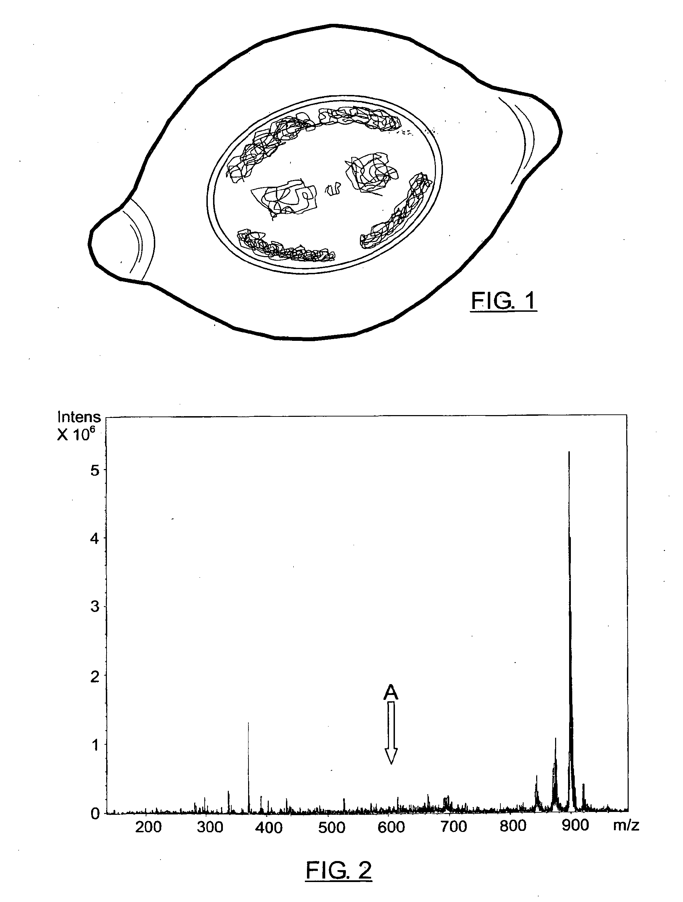

Figure 1. Schematic representation of a fruit marked with the contrast agent of the invention.
Figure 2. MS-HPLC (mass spectrometry coupled to a column of high performance liquid chromatography) analysis spectrum of an orange untreated peel extract (reference). This extract corresponds to a portion of an orange exocarp pressed and diluted in methanol. The mass spectrometer analyses the m/z (mass and electric charge ratio) of fragments of the sample, previously separated in the column. This spectrum does not show any noticeable signal at m/z =600.

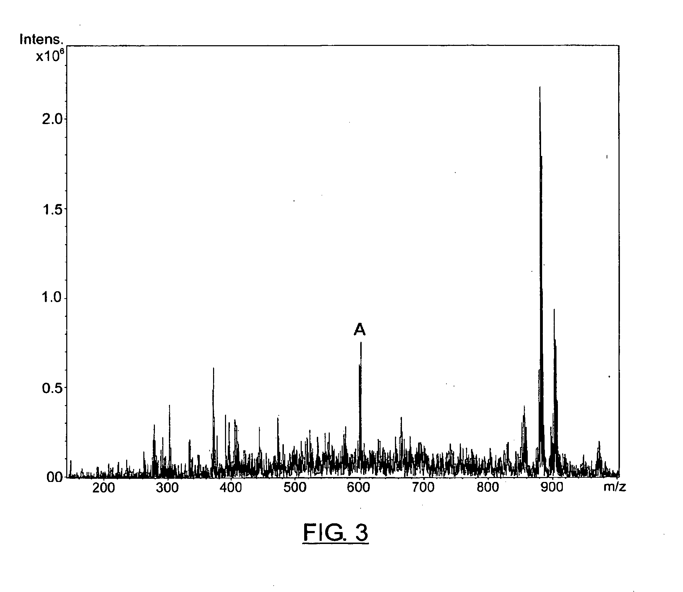

Figure 3. Spectrum of the analysis by MS-HPLC (mass spectrometry coupled to a column of high performance liquid chromatography) of an orange peel extract marked according to the invention (laser incision and application of contrast agent). In this spectrum are several peaks for m/z values of approximately 600. Those signals correspond to various metal-polyphenol complexes (ie metal-flavonoid) according to the results reported by Fernandez et al. (Fernández, M.T. et al., Iron and copper chelation by flavonoids: an electrospray mass spectrometry study, Journal of Inorganic Biochemistry 92 (2002) 105-111).

### PREFERRED EMBODIMENTS

Example 1. Preparation of 1 liter of contrast agent using hydrated ferric oxide as chromogen additive. For this purpose, 10 g of hydrated ferric oxide ("yellow iron oxide" as product reference, chemical formula FeO(OH)·xH₂O provided by ROHA Europe S.L.U.) were mixed with 50 g 38% hydrochloric acid (acidity regulator from EPSA FoodGrade Additives) and stirred in a suitable glass container with a volume exceeding 1 L capacity until complete dissolution. Then, 800 g of food grade water, 4.35 g of sodium tribasic citrate hydrate acidity regulator (from EPSA Food Additives) and 0.93 g of polysorbate 80 (food grade emulsifier known as polyoxyethylenesorbitan monooleateacquired from Safic-Alcan Specialties, Inc.) were added and mixed. Constant stirring was maintained until complete dissolution of polysorbate and sodium citrate tribasic hydrate and homogenization of the solution. Finally, the content was transferred to a volumetric flask of 1 L of capacity and filled with food quality water.

Example 2. Preparation of 1 liter of contrast agent using ferric oxide anhydrous as chromogen additive. For this purpose 10 g of ferric oxide ("red iron oxide" as product reference, chemical formula Fe₂O₃ and provided by ROHA Europe S.L.U.) were mixed with 50 g 38% hydrochloric acid (acidity regulator from EPSA food grade additives) and stirred in a suitable glass container with a volume exceeding 1 L capacity until complete dissolution. Then 800 g of food grade water, 4.35 g of sodium tribasic citrate hydrate acidity regulator (from EPSA Food Additives) and 0.93 g of polysorbate 80 (food grade emulsifier known as polyoxyethylene sorbitan monooleate acquired from Safic-Alcan Specialties, Inc.) were added and mixed. Constant stirring was maintained until complete dissolution of polysorbate and sodium citrate tribasic hydrate and homogenization of the solution. Finally, the content was transferred to a volumetric flask of 1 L of capacity and filled with food quality water.

Example 3. Preparation of 1 liter of contrast agent using ferric ferrous oxide as chromogen additive. For this purpose 10 g of ferric ferrous oxide ("Black iron oxide" as product reference, chemical formula Fe₃O₄ and provided by ROHA Europe S.L.U.) were mixed with 50 g 38% hydrochloric acid (acidity regulator from EPSA food grade additives) and stirred in a suitable glass container with a volume exceeding 1 L capacity until complete dissolution. Then 800 g of food grade water, 4.35 g of sodium tribasic citrate hydrate acidity regulator (from EPSA Food Additives) and 0.93 g of polysorbate 80 (food grade emulsifier known as polyoxyethylene sorbitan monooleate acquired from Safic-Alcan Specialties, Inc.) were added and mixed. Constant stirring was maintained until complete dissolution of polysorbate and sodium citrate tribasic hydrate and homogenization of the solution. Finally, the content was transferred to a volumetric flask of 1 L of capacity and filled with food quality water.

Example 4. Preparation of 1 liter of contrast agent using ferric ferrous oxide as chromogen additive and L-ascorbyl stearate as antioxidant additive. For this purpose 10 g of ferric ferrous oxide ("Black iron oxide" as product reference, chemical formula Fe₃O₄ and provided by ROHA Europe S.L.U.) were mixed with 50 g 38% hydrochloric acid (acidity regulator from EPSA food grade additives) and stirred in a suitable glass container with a volume exceeding 1 L capacity until complete dissolution. Then 800 g of food grade water, 4.35 g of sodium tribasic citrate hydrate acidity regulator (from EPSA Food Additives), 6.64 g of L-ascorbyl stearate (provided by Trades SA) and 0.93 g of polysorbate 80 (food grade emulsifier known as polyoxyethylene sorbitan monooleate acquired from Safic-Alcan Specialties, Inc.) were added and mixed. Constant stirring was maintained until complete dissolution of polysorbate and sodium citrate tribasic hydrate and homogenization of the solution. Finally, the content was transferred to a volumetric flask of 1 L of capacity and filled with food quality water.

Example 5. Preparation of 1 liter of contrast agent using ferric chloride as chromogen additive. For this purpose 45.03 g of ferric chloride (chemical formula FeCl₃·6H₂O, Sigma-Aldrich España SA) were dissolved with 700 g of food grade water in a glass vessel greater than 1 liter. Then, 2.90 g of sodium tribasic citrate hydrate acidity regulator (from EPSA Food Additives) and 1.86 g of polysorbate 80 (food grade emulsifier known as polyoxyethylene sorbitan monooleate acquired from Safic-Alcan Specialties, Inc.) were added and mixed. Constant stirring was maintained until complete dissolution of polysorbate and sodium citrate tribasic hydrate and homogenization of the solution. Finally, the content was transferred to a volumetric flask of 1 L of capacity and filled with food quality water.

Example 6. Preparation of 1 liter of contrast agent using ferric chloride as chromogen additive and hydroxypropyl methylcellulose (HPMC) as emulsifying additive. For this purpose 100 g of HPMC ("NE Metolose 4000" as product reference from Safic-Alcan Specialities SA) were mixed with 400g of deionized water in a glass recipient. The mixture was heated and keep at 80°C for 10 minutes maintaining constant agitation, then the heat source was removed and the mixture was allowed to cool while 450.21 g of deionized water and 45.03 g of ferric chloride (chemical formula FeCl₃·6H₂O, Sigma-Aldrich España SA), 2.90 g of sodium tribasic citrate hydrate acidity regulator (from EPSA Food Additives) and 1.86 g of polysorbate 80 (food grade emulsifier known as polyoxyethylene sorbitan monooleate acquired from Safic-Alcan Specialties, Inc.) were added and mixed, keeping the stirring for 20 minutes.

Example 7. Preparation of 1 liter of contrast agent using cupricchloride as chromogen additive. For this purpose14.83 g of cupric chloride (chemical formula CuCl₂, Sigma-Aldrich España SA) were dissolved with 700 g of food grade water in a glass vessel with a volume more than 1 liter. Then, 2.90 g of sodium tribasic citrate hydrate acidity regulator (from EPSA Food Additives) and 1.86 g of polysorbate 80 (food grade emulsifier known as polyoxyethylene sorbitan monooleate acquired from Safic-Alcan Specialties, Inc.) were added and mixed until complete dissolution. Finally, the content was transferred to a volumetric flask of 1 L of capacity and filled with food quality water.

Example 8. Description of the marking procedure applied to Verna variety lemons. The lemon was placed on a XYZ table with manual control movement whose origin is referred to a chassis point of the laser system. The fruit was centered over the focus lens and placed at a distance that matches its focal length. Under these conditions the emission was activated and a shallow superficial incision was produced in the lemon (less than 500 microns). The laser system used has an active medium that is a gas mixture of CO₂: He: N₂ with a nominal power of 100 W, equipped with a galvanometer mirror head capable of reproducing pre-designed characters and logos. The system features a collimated beam of 14 mm in diameter and a focusing system equipped with a ZnSe lens whose focal length is 180 mm. The motif or logo that is reproduced by the laser beam is previously designed in a computer equipped with a system capable of activating the laser system and controlling the galvanometer mirrors (XY) that guide the beam. Furthermore, allows reproducing the design on the fruit surface using specific energy parameters. After irradiation, the fruit was removed from its holder and applied the contrast agent described in Example 4.To this end, an automatic spray gun was used. That gun features a spray nozzle model Unijet from Spray-Systems ® with the following characteristics: 910 µm in diameter,65° of dispersion angle, built in stainless steel 313, and working at a pressure of 0.3 MPa over 0.25 s. The volume of contrast agent dispersed in these conditions is approximately 2.3 mL. After the reaction of the contrast agent with the incision, the appearance of a high contrast mark in the zone where the incision occurred with the laser beam was observed. The areas adjacent to the incision did not develop contrast and they retained the original color of the skin's natural fruit.

## Claims

1. A procedure for marking fruit comprising:
a) making a superficial incision in a fruit surface with a laser
b) depositing in such incision a contrast agent comprising at least one metal cation at a concentration between 0.001% and 1% of the total weight, able to react with any of the phenolic and polyphenolic compounds present in the superficial tissues of the fruit.

2. Process according to claim 1, **characterized in that** the metal cation is selected from the group consisting of Fe (II), Fe (III), Cu (I) and Cu (II).

3. Process according to claim 1 or 2, **characterized in that** the metal cation is in the form of a salt or an oxide.

4. Process according to claim 3, **characterized in that** such metal cation salt or oxide is selected from the group consisting of ferric oxide, ferrous oxide, ferric ferrous oxide, iron chloride, copper (II) oxide, copper (I) oxide, copper (I) chloride, copper (II) chloride, copper (I) and copper (II) acetate.

5. Process according to any of claims 1 to 4, **characterized in that** said contrast agent comprises an acidity regulator additive.

6. Process according to claim 5, **characterized in that** said acidity regulator additive is hydrochloric acid or sodium citrate tribasic.

7. Process according to any of claims 1 to 6, **characterized in that** said contrast agent comprises an emulsifier additive.

8. Process according to claim 7, **characterized in that** the emulsifier additive is polysorbate or HPMC.

9. Process according to any of claims 1 to 8, **characterized in that** said contrast agent comprises an antioxidant additive.

10. Process according to claim 9, **characterized in that** the antioxidant additive is L-ascorbyl stearate.

11. Process according to any of claims 1 to 10, **characterized in that** said contrast agent comprises a complexing additive.

12. Process according to claim 11, **characterized in that** the complexing additive is ascorbic acid, lactic acid or any of the salts of these acids.

## Patentansprüche

1. Ein Verfahren für Obstmarkierung, umfassend:
a. Ein superfizieles Einschnitt der Oberfläche der Frucht mit einem Laser
b. Abscheiden derart Einschnitt ein Kontrastmittel, umfassend mindestens ein Metallkation in einer Konzentration zwischen 0,001% und 1% des Gesamtgewichts, mit alle phenolischen und polyphenolischen Verbindungen in den oberflächlichen Geweben der Frucht vorhanden reagieren.

2. Verfahren nach Anspruch 1, **dadurch gekennzeichnet, daß** das Metallkation aus der Gruppe bestehend aus Fe (II), Fe (III), Cu (I) und Cu (II) ausgewählt ist

3. Verfahren nach Anspruch 1 oder 2, **dadurch gekennzeichnet, daß** das Metallkation in Form eines Salzes oder eines Oxids ist.

4. Verfahren nach Anspruch 3, **dadurch gekennzeichnet, daß** solche Metallkationensalz oder Oxid aus der Gruppe bestehend aus Eisenoxid, Eisenoxid, Eisen-Eisenoxid, Eisenchlorid, Kupfer (II) oxid, Kupfer (I)-oxid, Kupfer (gekennzeichnet I)-chlorid, Kupfer (II)-chlorid, Kupfer (I) und Kupfer (II)-acetat ausgewählt wird.

5. Verfahren nach einem der Ansprüche 1 bis 4, **dadurch gekennzeichnet, daß** das Kontrastmittel dadurch ein Säureregulator Zusatz enthält.

6. Verfahren nach Anspruch 5, **dadurch gekennzeichnet, daß** der Säureregulator Zusatz Salzsäure oder Natriumcitrat tribasic ist.

7. Verfahren nach einem der Ansprüche 1 bis 6, **dadurch gekennzeichnet, daß** das Kontrastmittel einen Emulgator Zusatz enthält.

8. Verfahren nach Anspruch 7, **dadurch gekennzeichnet, daß** solches Emulgator Zusatz ein Polysorbat oder HPMC ist.

9. Verfahren nach einem der Ansprüche 1 bis 8, **dadurch gekennzeichnet, daß** solches Kontrastmittel ein Antioxydant enthält.

10. Verfahren nach Anspruch 9, **dadurch gekennzeichnet, daß** solches Antioxydant Zusatzt L-Ascorbylstearat ist.

11. Verfahren nach einem der Ansprüche 1 bis 10, dadurch gegennzeichnet, daß solches Kontrastmittel ein Komplexbildner Zusatz enthält.

12. Verfahren nach Anspruch 11, **dadurch gekennzeichnet, daß** solches Komplexbildner Zusatz Ascorbinsäure, Milchsäure, oder eines der Salze dieser Säuren ist.

## Revendications

1. Une procédure pour marquer les fruits qui comprend:
a. La réalisation d'une incision sur la surface d'un fruit avec un laser.
b. Le dépot sur cette incision d'un agent de contraste qui comprend au moins un cation de métal a une concentration entre 0.001 % et 1% du poids total, capable de réagir avec n'importe quel composant phénolique ou polyphénolique présent dans les tissus superficiels du fruit.

2. Un procédé selon la déclaration 1, de telle nature que le cation métallique est sélectionné à partir d'un groupe consistant en Fe (II), Fe (III), Cu (I) et Cu (II).

3. Un procédé selon la déclaration 1 ou 2, de telle nature que le cation métallique est sous forme d'un sel ou d'un oxyde.

4. Un procédé selon la déclaration 3, de telle nature que le sel ou oxyde de cation métallique est sélectionné à partir d'un groupe consistant en oxyde de fer, oxyde ferreux, oxyde ferrique ferreux, chlorure de fer, oxyde de cuivre(II), oxyde de cuivre(I), chlorure de cuivre (I), chlorure de cuivre (II), cuivre (I) et acétate de cuivre (II).

5. Procédé selon les déclarations 1 à 4, de telle nature que ledit agent de contraste contient un additif régulateur d'acidité.

6. Procédé selon la déclaration 5, de telle nature que ledit additif régulateur d'acidité est un acide hydrochlorique ou un tribasique de citrate de sodium.

7. Procédé selon n'importe quelle déclaration 1 à 6, de telle nature que ledit agent de contraste contient un additif émulsifiant.

8. Procédé selon la déclaration 7, de telle nature que l'additif émulsifiant est un polysorbate ou un HPMC.

9. Procédé selon n'importe quelle déclaration 1 à 8, de telle nature que ledit agent de contraste contient un additif antioxydant.

10. Procédé selon la déclaration 9, de telle nature que ledit additif antioxydant est un stéarate de L-ascorbyle.

11. Procédé selon n'importe quelle des déclarations 1 à 10, de telle nature que l'agent de contraste contient un additif complexant.

12. Procédé selon la déclaration 1l, de telle nature que l'additif complexant est de l'acide ascorbique, de l'acide lactique ou n'importe quel sel de ces acides.
